# EUROPÄISCHE PATENTSCHRIFT

(11) **EP 3 034 340 B1**
(45) Veröffentlichungstag und Bekanntmachung des Hinweises auf die Patenterteilung: **03.10.2018**
(21) Anmeldenummer: 15002996.5
(22) Anmeldetag: 20.10.2015
(51) Int. Cl.: B60J 5/06

(54) **FAHRZEUGAUFBAU MIT EINER SCHIEBEPLANE**
VEHICLE STRUCTURE WITH A SLIDING TARPAULIN
STRUCTURE DE VEHICULE DOTEE D'UNE BACHE COULISSANTE

(30) Priorität: 16.12.2014 DE 102014018486
(43) Veröffentlichungstag der Anmeldung: 22.06.2016
(73) Patentinhaber: Fahrzeugwerk Bernard Krone GmbH, 48480 Spelle (DE)
(72) Erfinder: Irion, Manfred, 49757 Werlte (DE); Rosin, Andreas, 49733 Haren (DE); Perk, Thorsten, 26901 Lorup (DE)
(74) Vertreter: Pott, Ulrich

(56) Entgegenhaltungen:
- EP-A1- 0 741 052
- EP-A1- 2 371 595
- WO-A1-2009/003218
- DE-A1- 19 923 976
- DE-U1- 29 614 252
- GB-A- 2 168 011
- GB-A- 2 291 095

## Beschreibung

Die Erfindung bezieht sich auf einen Fahrzeugaufbau mit einem sich oberhalb eines Laderaumbodens erstreckenden Laderaum, der bereichsweise durch zumindest eine entlang einer Führung eines Aufbauaußenbaumprofils über zumindest einen Planenroller bewegbare Schiebeplane abzuschließen und zu öffnen ist, wobei der Planenroller zumindest eine drehbare, entlang der Führung des Aufbauaußenbaumprofils abrollbare Laufrolle aufweist, die mit einem Befestigungsansatz versehen ist, an dem lageversetzt zur Laufrolle ein Planenhalter zur Halterung der Schiebeplane oder eines Schiebeplaneverbinders festlegbar ist.

Fahrzeugaufbauten der vorgenannten Art sind in verschiedensten Ausgestaltungen bekannt. Viele Fahrzeugaufbauten haben Vorderwände aus einem metallischen Material oder einem Kunststoffmaterial sowie Heckflügeltüren, einen Laderaumboden und obere Dachrahmenteile unter Einschluss von Außenbaumprofilen, wobei zwischen seitlichen Rungen und Eckrungen bewegbare Schiebeplanen vorgesehen sind, die zur Be- und Entladung des Laderaumes aufzuschieben und dann wieder zu schließen sind. Dazu sind diese über mehrere, mit Abstand zueinander angeordnete Planenroller in oder an Führungen der Aufbauaußenbaumprofile beweglich geführt.

Je nach Ausgestaltung können beide Seiten des Fahrzeugaufbaus Schiebeplanen aufweisen. Es ist auch bekannt, nur an einer Seite derartige Schiebeplanen vorzusehen, teilweise auch nur bereichsweise.

Aus der DE 102 52 461 B4 ist ein Aufbau eines Nutzfahrzeuges der eingangs genannten Art bekannt, bei der im Dachrahmen des Fahrzeugaufbaus bzw. am Außenbaumprofil eine Führung für Planenroller vorgesehen ist, die jeweils Laufrollen aufweisen. An einem solchen Planenroller ist die Schiebeplane befestigt, die infolge ihres Eigengewichtes an den unteren, das heißt zum Laderaumboden hin orientierten Bereichen des Außenbaumes während ihrer Schiebebewegung entlang gleiten muss. Um ein dortiges unvermeidbares Scheuern im Hinblick auf die Verschleißanfälligkeit der Plane zu vermeiden und auch, um eine schwergängige Auf- und Zuschiebebewegung zu vermindern, ist dort zwischen der Seitenplane und den unteren Profilbereichen des Aufbauaußenbaums eine Gleitplatte vorgesehen, die im Bedarfsfall ausgewechselt werden kann. Hierdurch soll Verschleißerscheinungen der Schiebeplane entgegengewirkt werden. Gleichwohl geht mit dieser Lösung der erhebliche Nachteil einher, dass die zur Verschiebung der Seitenplane aufzubringenden Schiebekräfte weiterhin noch erheblich sind aufgrund der zwischen der Gleitplatte bzw. der Schiebeplane und den Aufbauaußenbaumprofilen vorherrschenden Reibkräfte.

Aus der DE 197 56 617 A1 ist ebenfalls ein Fahrzeugaufbau für Nutzfahrzeuge der eingangs genannten Art bekannt, bei dem zumindest ein Teil einer Seiten- oder Dachfläche von einer Schiebeplane eingenommen wird, die zwischen einer im Wesentlichen glatten Schließstellung und einer die Seiten- und/oder Dachfläche zumindest teilweise freigebenden, Falten bildenden Öffnungsstellung zumindest im Bereich einer Planenkante verschieblich am Fahrzeugaufbau geführt ist.

Die Plane weist ein entlang an einer Planenkante geführtes, zugsteifes, druckflexibles Spannelement auf. Dieses ist an abrollbaren Laufrollen geführt, wobei zwei einander zugeordnete Laufrollen einerseits eine horizontale und eine andere Laufrolle eine vertikale Drehachse aufweisen. Damit geht ebenfalls der Nachteil einher, dass die zur Verschiebung der Schiebeplane aufzubringenden Kräfte erheblich sind aufgrund der zwischen einem Außenrahmen und der Schiebeplane vorherrschenden Reibkräfte. Die Gestehungskosten eines derartigen Planenrollers mit mehreren Laufrollen mit horizontal und vertikal ausgerichteter Drehachsen sind zudem erhöht.

Aus der GB 2291095 A ist ein Fahrzeugaufbau der eingangs genannten Art bekannt, bei dem ein Planhalter einen zum Laderaum hin abgekröpften Anschlussbereich mit einer Aufnahme zur Halterung der Schiebeplane aufweist. Die Schiebeplane erstreckt sich in einem Bereich unterhalb der Lagerstellen des Planhalters, jedoch seitlich versetzt nach außen zur vertikalen Längsmittelebene der Lagerstellen des Planhalters, so dass ein Kippmoment für die Lagerstellen in Richtung der Ausnehmung des Nutzfahrzeugsaufbaus erzeugt werden kann. Damit gehen erhebliche Verschleißrisiken einher.

Es ist Aufgabe der vorliegenden Erfindung, einen Fahrzeugaufbau der eingangs genannten Art derart weiterzubilden, dass die Seitenplane mit einem verminderten Kraftaufwand zu bewegen ist, verschleißarm bewegt werden kann und zudem die Gestehungskosten des Planenrollers gegenüber herkömmlichen Planenrollern nicht wesentlich erhöht sind.

Der Planenhalter weist einen der Schiebeplane oder dem Schiebeplaneverbinder zugewandten Anschlussbereich auf, der eine Längsmittelebene aufweist, die die vertikale Längsmittelebene des Planenhalters unter einem spitzen Winkel (α) schneidet.

Zur Lösung dieser Aufgabe zeichnet sich der Fahrzeugaufbau der eingangs genannten Art dadurch aus,
dass der Planenhalter (14) einen der Schiebeplane (7) oder dem Schiebeplaneverbinder (15) zugewandten Anschlussbereich (14.3) aufweist, der eine Längsmittelebene (ABE) aufweist, die die vertikale Längsmittelebene (PHE) des Planenhalters (14) unter einem spitzen Winkel (α) schneidet.

Damit ist ein Fahrzeugaufbau zur Verfügung gestellt, bei dem aufgrund des Eigengewichtes der Schiebeplane über die Aufnahme des Planenhalters und somit über den Planenhalter und den Befestigungsansatz ein geringfügiges Kippmoment auf die Laufrolle des Planenrollers bzw. die Laufrollen des Planenhalters innerhalb der Führung ausgeübt wird, so dass die Laufrolle sich von einer seitlichen Führung wegbewegen und nur noch auf ihrer unteren Lauffläche abrollen kann, sodass auch die Schiebeplane von sonstigen Profilteilen des Aufbaus wegbewegt werden kann und mithin, ohne zu scheuern, bewegt werden kann. Dies ist durch die Anbindung der Schiebeplane bzw. eines oder mehrerer Schiebeplanenverbinder(s) zu bewerkstelligen, indem die Aufnahme im Anschlussbereich so nahe wie möglich an die vertikale Längsmittelebene der Laufrolle in ihrer vertikalen Stellung bzw. möglichst nah an die Längsführung der Laufrolle herangeführt ist, auch wenn der Befestigungsansatz der Laufrolle hin zum Planenhalter ein gewisses Maß über die Außenseite eines Aufbauaußenbaumprofiles überwinden muss, um beispielsweise noch weitere Aufnahmen innerhalb des Aufbauaußenbaumprofils zu ermöglichen, so dass sich der Befestigungsansatz über diesen hinwegerstrecken muss.

Wesentlich ist, dass durch den seitlichen Lageabstand hin zum Laderaum und mithin durch diese einwärts versetzte Anordnung der Aufnahme zur Halterung der Schiebeplane und/oder des Schiebeplanverbinders ein so geringstmögliches Kippmoment erreicht wird, dass die Laufrolle während des Aufschiebens Verschleiß verursachende Kontakte vermeidet.

Dies erfolgt dadurch, dass der Planenhalter einen die Aufnahme aufweisenden Anschlussbereich hat, der eine Längsmittelebene aufweist, die eine vertikale Längsmittelebene des Planenhalters unter einem spitzen Winkel schneidet. Dies ist beispielsweise dann der Fall, wenn der Planenhalter zum Beispiel einstückig ausgebildet ist in mit einer im Wesentlichen plattenförmigen Gestaltung und der Anschlussbereich abgekröpft ist zu einem ansonsten im Wesentlichen vertikal ausgerichteten Zwischenbereich und einem Befestigungsbereich.

Die Aufnahme kann auch darin bestehen, dass zum Beispiel der Anschlussbereich stift- oder bolzenförmig oder in Gestalt eines sonstigen Befestigungselementes ausgebildet ist oder derartige Befestigungselemente trägt. Besonders bevorzugt wird jedoch, wenn, wie vorstehend beschrieben, der Planenhalter plattenförmig ausgebildet ist mit einem einstückig sich daran anschließenden abgekröpften bzw. abgewinkelten Anschlussbereich, der eine längliche Öffnung als Aufnahme aufweist.

Oberhalb einer solchen länglichen Öffnung im Anschlussbereich kann sich eine mittlere längliche Öffnung anschließen und dann noch ein oberer Befestigungsbereich, der eine weitere längliche Öffnung aufweist, die zum Beispiel von einem Gurtband, dass mit der Schiebeplane verbunden ist, durchsetzt werden kann. Dieses Durchsetzen des gurtförmigen Schiebeplaneverbinders kann derart erfolgen, dass die Schiebeplane durch dieses gurtförmige Verbindungselement an dem Planenhalter festgeklemmt werden kann und zwar durch Selbstklemmung in Folge des Eigengewichtes der Schiebeplane. Bei drei Öffnungen kann dies auch dazu genutzt werden, um die Schiebeplane höhenverstellbar an dem Planenhalter zu befestigen, indem verschieden lange Strecken des gurtförmigen Schiebeplanverbindungselementes durch die verschiedenen Öffnungen des Planenhalters hindurchgefädelt werden.

Insgesamt ist damit ein kostengünstiger Fahrzeugaufbau zur Verfügung gestellt, mit dem in verschleißunauffälliger Weise eine Schiebeplane mit dem Planenroller zu bewegen ist, und zwar mit verminderten Schiebekräften, wobei der Planenroller gestehungsgünstig zur Verfügung zu stellen ist.

Weitere vorteilhafte Ausgestaltungen der Erfindung ergeben sich aus weiteren Unteransprüchen, der nachfolgenden Beschreibung und der Zeichnung.

In der Zeichnung zeigen:
- Fig. 1: ausschnittsweise in einer perspektivischen Seitenansicht einen Fahrzeugaufbau für ein Nutzfahrzeug;
- Fig. 2: ausschnittsweise ein Aufbauaußenbaumprofil mit einer an einem Planenroller befestigten Schiebeplane;
- Fig. 3: eine Querschnittsdarstellung durch das Aufbauaußenbaumprofil mit Planenroller und Schiebeplane;
- Fig. 4: vergrößert (teilweise geschnitten) den Planenroller nach Fig. 3;
- Fig. 5: perspektivisch den Planenroller als Einzelteil in einer Ansicht schräg von vorne;
- Fig. 6: den Planenroller gemäß Fig. 5 in einer Schnittdarstellung.

In der Zeichnung sind grundsätzlich übereinstimmende Teile mit übereinstimmenden Bezugsziffern versehen.

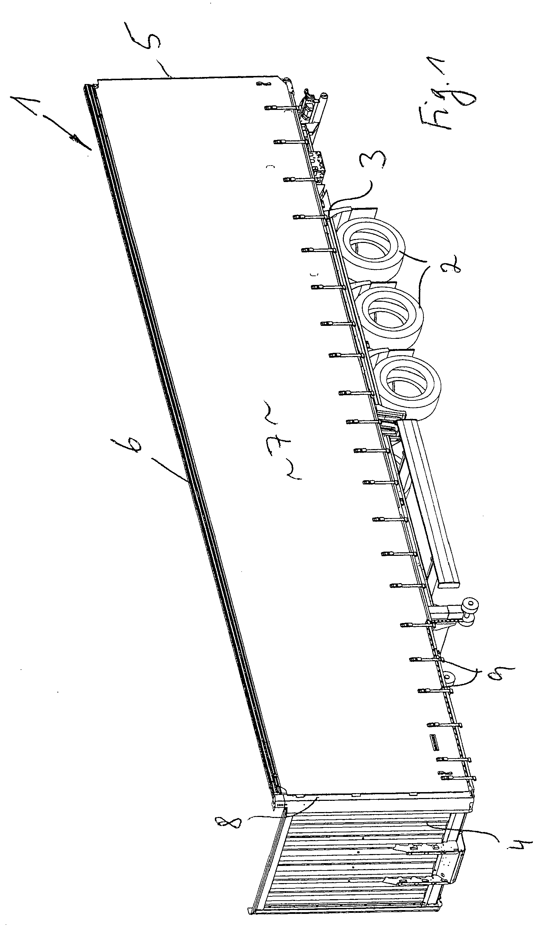

In Fig. 1 ist allgemein mit 1 ein Fahrzeugaufbau beziffert mit einem über Räder 2 auf dem Erdboden abgestützten Fahrgestell 3 mit einer Vorderwand 4, einem Heck 5, einem Aufbauaußenbaumprofil 6 sowie einer Schiebeplane 7, die an Eckrungen 8 im geschlossenen Zustand festlegbar und über Spanngurte 9 mit dem Fahrgestell 3 im geschlossenen Zustand verspannbar ist. In der Fig. 1 sind nur einige Teile des Fahrzeugaufbaus 1 dargestellt und andere der besseren Übersichtlichkeit wegen nicht dargestellt worden.

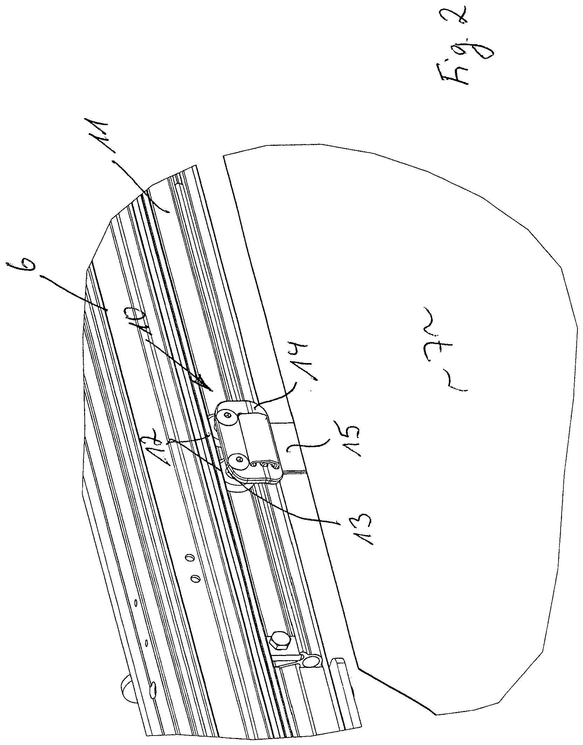

In Fig. 2 sind ausschnittsweise vergrößert das Aufbauaußenbaumprofil 6 und die Schiebeplane 7 dargestellt, die über einen allgemeinen mit 10 bezifferten Planenroller längsverschieblich geführt ist. Dazu ist in dem Aufbauaußenbaumprofil 6 eine Führung 11 angeordnet, in der die Laufrollen 12 des Planenrollers 10 abrollen können. Die Laufrollen 12 sind über Befestigungsansätze 13 mit einem Planenhalter 14 verbunden. In dem gezeigten Ausführungsbeispiel ist die Schiebeplane 7 über einen gurtförmigen Schiebeplaneverbinder 15 mit dem Planenhalter 14 verbunden, wie noch näher ausgeführt werden wird.

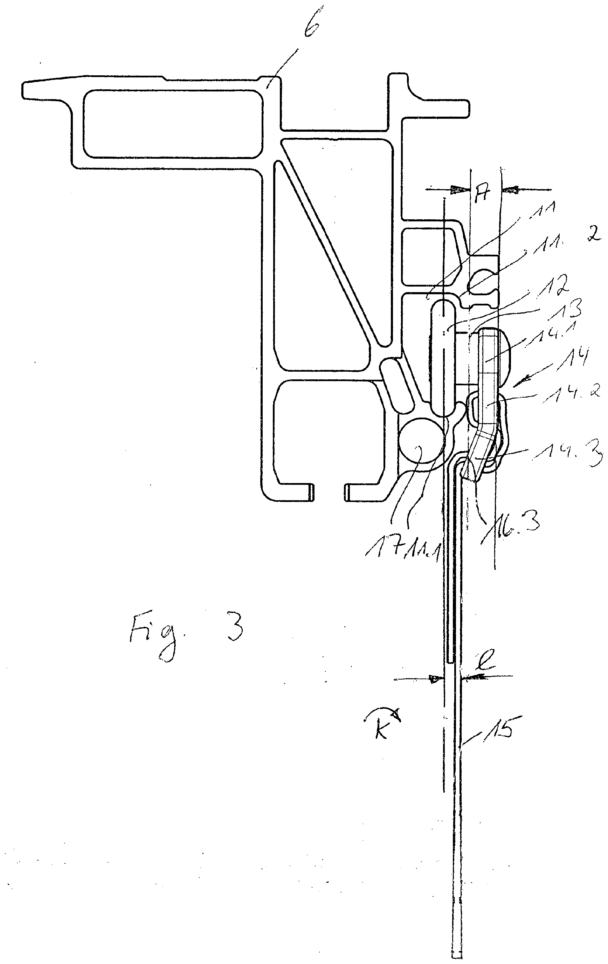

Fig. 3 zeigt einen Querschnitt durch das Aufbauaußenbaumprofil 6. Dort ist die Führung 11 ersichtlich, in der die Laufrollen 12 des Planenrollers 10 abrollen können. Dazu ist in der Führung 11 eine Laufbahn 11.1 ausgebildet im unteren Bereich und eine seitliche Stützfläche 11.2. Die Laufrolle 12 weist den Befestigungsansatz 13 auf, der von dem Aufbauaußenbaumprofil 6 wegweist und mithin auch vom Nutzfahrzeugaufbau seitlich nach außen hin ausgerichtet ist. An diesem Befestigungsansatz 13 ist der Planenhalter 14 befestigt, der mithin das Aufbauaußenbaumprofil 6 nach unten weisend außen überragt, um sich über den Raum 17 im Aufbauaußenbaumprofil 6 erstreckt. An dem Planenhalter 14 ist über den gurtförmigen Schiebeplaneverbinder 15 die Schiebeplane 7 gehaltert. Wie im Einzelnen ersichtlich ist, ist der Planenhalter 14 so gestaltet, dass er einen Befestigungsbereich 14.1 aufweist, einen mittleren Bereich 14.2 und einen Anschlussbereich 14.3 für den Schiebeplaneverbinder 15, der von der im Wesentlichen vertikalen Ausrichtung des Befestigungsbereiches 14.1 und des mittleren Bereiches 14.2 abgekröpft nach innen ausgerichtet ist, aber zur Fahrzeuginnenseite ausgerichtet abgekröpft ist.

Hängt, wie in Fig. 3 angedeutet, der Schiebeplaneverbinder 15 in dem Planenhalter 14, ist die Laufrolle 12 aufgrund des im Außenbereich des Anschlussbereiches 14.3 aufliegenden Schiebeplaneverbinders 15 mit dem Eigengewicht der Schiebeplane 7 mit einem geringstmöglichen Kippmoment K im Uhrzeigersinn um den Hebelarm I belastet, so dass die Laufrolle 12 von dem oberen Bereich 11.2 wegbewegt ist und nur noch, wie in Fig. 3 gezeigt, auf der unteren Führungsfläche 11.1 der Führung 11 abgestützt ist und dort auch während einer Schiebebewegung der Plane 7 im Öffnungs- und Schließsinne abrollt, so dass im Bereich 11.2 der Führung 11 keine oder fast keine Berührung mehr stattfindet, wodurch die Rolle 12 sehr verschleißarm in der Führung 11 abgestützt und bewegt werden kann.

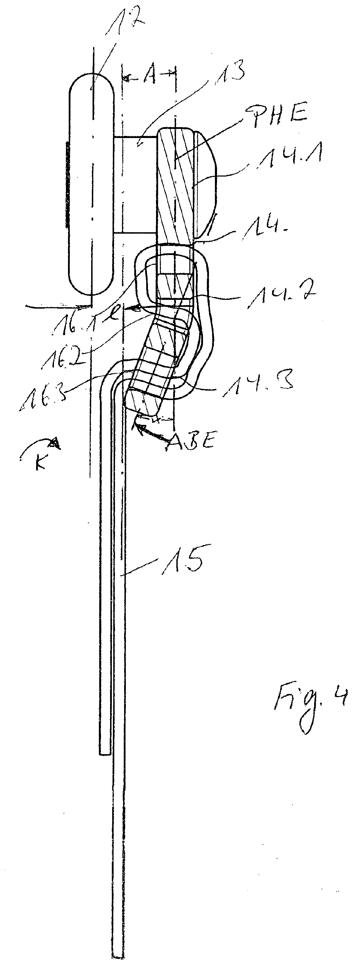

In Fig. 3 ist das Abstandsmaß (A) eingezeichnet zwischen dem linkem Ende der Öffnung 16.3 im Anschlussbereich 14.3 und der Außenseite des Planenhalters 14. Das Abstandsmaß (A) kann aber auch durch andere Bezugspunkte festgelegt werden, wie in Fig. 4 gezeigt. Wesentlich ist, dass ein Abstandsmaß (A) derart gewählt ist, dass ein Kippmoment auf die Laufrolle 12 ausgeübt wird.

Die teilweise geschnittene Darstellung nach Fig. 4 verdeutlicht dies. Dort ist wiederum die Laufrolle 12, der Befestigungsansatz 13, der Planenhalter 14 mit seinem Anschlussbereich 14.1, dem mittleren Bereich 14.2 und dem Anschlussbereich 14.3 gezeigt. Dort ist ein Abstandsmaß (A) eingezeichnet, das sich hier gewählt wurde aus dem Abstand zwischen der vertikalen Längsmittelebene (PHE) und dem in der Zeichnung linken äußeren Endpunkt des Anschlussbereiches 14.3 des abgekröpften Anschlussbereiches 14.3. Die Längsmittelebene (ABE) des abgekröpften Bereiches 14.3 schneidet die vertikale Längsmittelebene (PHE) unter einem Winkel (α). Hierbei handelt es sich um einen spitzen Winkel. Innerhalb des Planenhalters 14 sind drei Öffnungen vorhanden, nämlich die Öffnungen 16.1, 16.2 und 16.3, durch die das gurtförmige Schiebeplaneverbindungselement 15 hindurchgeführt ist. Anstelle der Öffnungen können auch sonstige Befestigungselemente als Aufnahme für die Schiebeplane oder des gurtförmigen Schiebeplaneaufnahmeelementes vorgesehen sein. Beispielsweise ist es möglich, an Befestigungselementen das gurtförmige Schiebeplaneelement an dem Planenhalter 14 aufzuhängen. Der untere Anschlussbereich 14.3 muss auch nicht abgekröpft ausgebildet sein. Vielmehr könnte der Planenhalter 14 auch als geradliniges Plattenelement ausgebildet sein, an dem beispielsweise ein Bolzen zum Aufhängen der Schiebeplane vorgesehen ist. Wichtig ist, dass durch die Lage der Aufnahme, auch wenn diese Aufnahme durch einen zum Beispiel Bolzen gebildet wird, die Aufnahmestelle der Schiebeplane bzw. eines Schiebeplanverbindungselementes so gelegen ist, dass ein möglichst geringes Rückstell- bzw. Kippmoment auf die Laufrolle 12 ausgeübt wird, sodass es sich von der Fläche 11.2 der Führung 11 in dem Aufbauaußenbaum 6 entfernt, sodass es im oberen Bereich zumindest annähernd berührungslos gleiten bzw. abrollen kann.

Fig. 4 verdeutlicht auch, wie das gurtförmige Verbindungselement 15 durch die insgesamt drei Öffnungen 16.1, 16.2 und 16.3 des Planenhalters 14 geführt ist. Das in der Fig. 4 rechte Gurtband des gurtförmigen Schiebeplaneverbinders 15 ist an der dem Aufbauaußenbaumprofil 6 zugewandten Seite, das heißt in der Fig. 4 von links nach rechts, zuerst durch die Öffnung 16.3 geführt, erstreckt sich von dieser Öffnung 16.3 an der dem Aufbauaußenbaumprofil 6 abgewandten Seite des Planenhalters 14 bis nach oben zur oberen Öffnung 16.1, ist durch diese zur Innenseite des Planenhalters 14 geführt und dann durch diese hindurchgeführt, um an der Außenseite des Planenhalters 14, das heißt an der im Aufbauaußenbaumprofil 6 abgewandten Seite des Planenhalters 14, wiederum zur unteren Öffnung 16.3 des Planenhaltes 14geführt zu werden. Dadurch kann das Gurtende des gurtförmigen Schiebeplaneverbinders 15 durch das Eigengewicht der Schiebeplane 7 an dem Planenhalter 14 festgeklemmt werden und somit aufgrund des Eigengewichtes der Schiebeplane 7 durch Selbstklemmung festgelegt sein, wobei je nachdem, wie lang das freie Ende des Gurtbandes des gurtförmigen Schiebeplaneverbinders 15 eingestellt ist, auch eine Längenverstellung ermöglicht, so dass die Schiebeplane 7 auf verschiedene Höhenlagen durch den Planenhalter 14 werkzeuglos einzustellen ist.

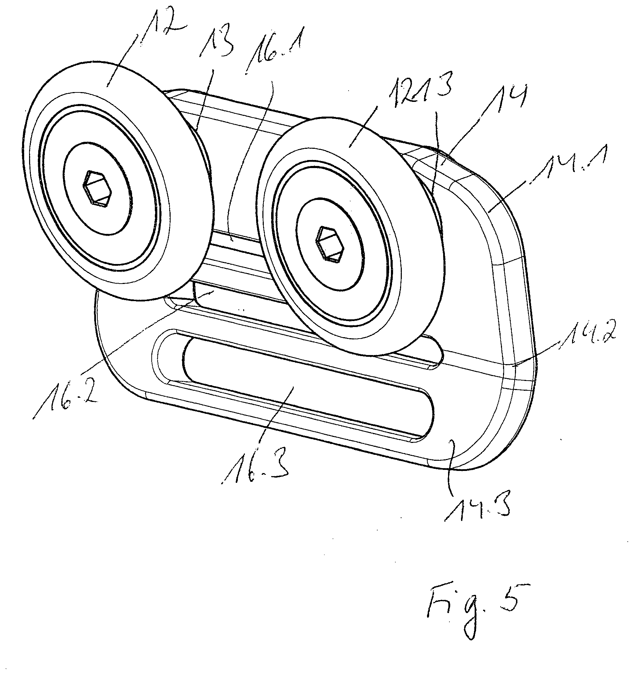

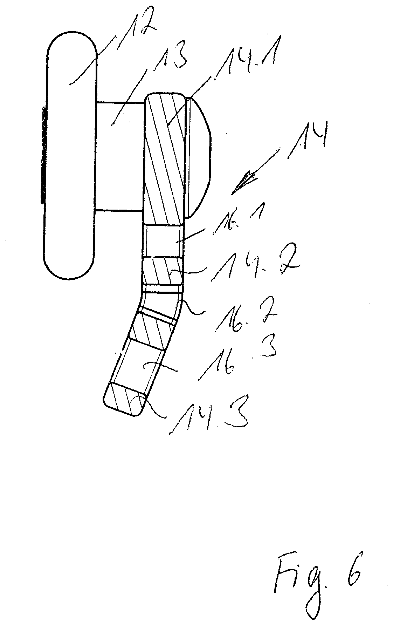

Fig. 5 verdeutlicht noch einmal den Planenhalter 14 mit seinem Anschlussbereich 14.3, dem mittleren Bereich 14.2 und dem Befestigungsbereich 14 und den länglich ausgeführten Öffnungen 16.1, 16.2 und 16.3 und auch dem Befestigungsansatz 13. Auch die teilweise geschnittene Darstellung nach Fig. 6 zeigt noch einmal in Einzeldarstellung den Planenhalter 14.

## Patentansprüche

1. Fahrzeugaufbau (1) mit einem sich oberhalb eines Laderaumbodens erstreckenden Laderaum, der bereichsweise durch zumindest eine entlang einer Führung (11) eines Aufbauaußenbaumprofils (6) über zumindest einen Planenroller (10) bewegbare Schiebeplane (7) abzuschließen und zu öffnen ist, wobei der Planenroller (10) zumindest eine drehbare, entlang der Führung (11) des Aufbauaußenbaumprofils (6) abrollbare Laufrolle (12) aufweist, die mit einem Befestigungsansatz (13) versehen ist, an dem lageversetzt zur Laufrolle (12) ein Planenhalter (14) zur Halterung der Schiebeplane (7) oder eines Schiebeplaneverbinders (15) festlegbar ist, wobei der Planenhalter (14) einen der Schiebeplane (7) zugewandten Anschlussbereich (14.3) mit einer Aufnahme (16.3) zur Halterung der Schiebeplane (7) und/oder des Schiebeplaneverbinders (15) aufweist, welche (16.3) mit seitlichem Lageabstand (A) einwärts versetzt zur Laufrolle (12) gegenüber einem mit dem Befestigungsansatz (13) verbundenen Befestigungsbereich (14.1) des Planenhalters (14) vorgesehen ist, **dadurch gekennzeichnet, dass** der Planenhalter (14) einen der Schiebeplane (7) oder dem Schiebeplaneverbinder (15) zugewandten Anschlussbereich (14.3) aufweist, der eine Längsmittelebene (ABE) aufweist, die die vertikale Längsmittelebene (PHE) des Planenhalters (14) unter einem spitzen Winkel (α) schneidet.

2. Fahrzeugaufbau (1) nach Anspruch 1, **dadurch gekennzeichnet, dass** der Anschlussbereich (14.3) des Planenhalters (14) gegenüber einem mit dem Befestigungsansatz (13) der Laufrolle (12) des Planenrollers (10) verbundenen Befestigungsbereiches (14.1) des Planenhalters (14) abgekröpft ausgebildet ist.

3. Fahrzeugaufbau (1) nach Anspruch 1 oder 2, **dadurch gekennzeichnet, dass** der Planenroller (10) mindestens zwei mit Lageabstand zueinander angeordnete, in der Führung (11) des Aufbauaußenbaumprofils (6) abrollbare Laufrollen (12) aufweist.

4. Fahrzeugaufbau (1) nach einem der Ansprüche 1 bis 3, **dadurch gekennzeichnet, dass** der Planenhalter (14) mit seinem Anschlussbereich (16.3) für die Schiebeplane (7) und/oder den Schiebeplaneverbinder (15) einstückig ausgebildet ist.

5. Fahrzeugaufbau (1) nach Anspruch 4, **dadurch gekennzeichnet, dass** der Planenhalter (14) nach Art einer abgekröpften Platte ausgebildet ist.

6. Fahrzeugaufbau (1) nach einem der Ansprüche 1 bis 5, **dadurch gekennzeichnet, dass** der Planenhalter (14) Befestigungselemente zur Festlegung der Schiebeplane (7) und/oder des Schiebeplaneverbinders (15) aufweist.

7. Fahrzeugaufbau (1) nach einem der Ansprüche 1 bis 5, **dadurch gekennzeichnet, dass** der Planenhalter (14) zumindest eine in dem der Schiebeplane (7) zugewandten Anschlussbereich (14.3) des Planenhalters (14) vorgesehene Öffnung (16.3) zur Durchführung eines gurtförmig ausgebildeten Schiebeplaneverbinders (15) aufweist.

8. Fahrzeugaufbau (1) nach Anspruch 7, **dadurch gekennzeichnet, dass** oberhalb der im Anschlussbereich (14.3) des Planenhalters (14) vorgesehen Öffnung (16.3) zumindest eine weitere Öffnung (16.1, 16.2) im Planenhalter (14) zur Durchführung des gurtförmig ausgebildeten Schiebeplaneverbinders (15) vorgesehen ist.

9. Fahrzeugaufbau (1) nach Anspruch 7 oder 8, **dadurch gekennzeichnet, dass** der Planenhalter (10) drei übereinander angeordnete, länglich ausgebildete Öffnungen (16.1, 16.2, 16.3) zur Durchführung des gurtförmig ausgebildeten Schiebeplaneverbinders (15) aufweist.

10. Fahrzeugaufbau (1) nach Anspruch 9, **dadurch gekennzeichnet, dass** der gurtförmige Schiebeplaneverbinder (15) an der dem Aufbauaußenbaumprofil (6) zugewandten Seite des Planenhalters (14) in die in dem der Schiebeplane (7) zugewandten Außenbereich gelegene Öffnung (16.3) einführbar ist, von dort an der dem Aufbauaußenbaumprofil (6) abgewandten Seite des Planenhalters (10) nach oben hin zu der dem Befestigungsansatz (13) benachbarten Öffnung des Planenhalters (10) geführt und durch diese hindurch geführt ist und an der Innenseite des Planenhalters in die mittlere Öffnung (16.1) des Planenhalters (10) geführt, durch diese hindurchgeführt und an der dem Aufbauaußenbaumprofil (6) abgewandten Außenseite des Planenhalters (14) in die in dem der Schiebeplane (7) zugewandten Anschlussbereich (14.3) gelegene Öffnung (16.3) von außen nach innen hindurchgeführt und an die dem Außenaufbaubaumprofil (6) zugewandte Innenseite des von der Schiebeplane (7) kommenden gurtförmigen Schiebeplaneverbinders (15) angelegt ist, so dass der gurtförmige Schiebeplaneverbinder (15) an dem Planenhalter (14) längenverstellbar selbstklemmend festlegbar ist.

## Claims

1. Vehicle structure (1) comprising a cargo space which extends above a cargo space base and is intended to be closed off and to be opened in regions by at least one sliding tarpaulin (7) which can be moved along a guide (11) of an external beam profile (6) of the structure and over at least one tarpaulin roller (10), the tarpaulin roller (10) comprising at least one rotatable roller (12) that can be rolled along the guide (11) of the external beam profile (6) of the structure and is provided with a fastening attachment (13) to which a tarpaulin holder (14) can be secured in a manner positionally offset from the roller (12) in order to hold the sliding tarpaulin (7) or a sliding-tarpaulin connector (15), the tarpaulin holder (14) comprising a connection region (14.3) that faces the sliding tarpaulin (7) and has a receiving portion (16.3) for holding the sliding tarpaulin (7) and/or the sliding-tarpaulin connector (15), which receiving portion (16.3) is provided at a lateral positional distance (A) so as to be offset inwardly from the roller (12) with respect to a fastening region (14.1) of the tarpaulin holder (14) connected to the fastening attachment (13), **characterised in that** the tarpaulin holder (14) comprises a connection region (14.3) that faces the sliding tarpaulin (7) or the sliding-tarpaulin connector (15), which connection region has a longitudinal central plane (ABE) which intersects the vertical longitudinal central plane (PHE) of the tarpaulin holder (14) at an acute angle (α).

2. Vehicle structure (1) according to claim 1, **characterised in that** the connection region (14.3) of the tarpaulin holder (14) is formed so as to be bent with respect to a fastening region (14.1) of the tarpaulin holder (14) connected to the fastening attachment (13) of the roller (12) of the tarpaulin roller (10).

3. Vehicle structure (1) according to either claim 1 or claim 2, **characterised in that** the tarpaulin roller (10) comprises at least two rollers (12) which are arranged at a positional distance from one another and can roll in the guide (11) of the external beam profile (6) of the structure.

4. Vehicle structure (1) according to any of claims 1 to 3, **characterised in that** the tarpaulin holder (14) is formed integrally with its connection region (16.3) for the sliding tarpaulin (7) and/or the sliding-tarpaulin connector (15).

5. Vehicle structure (1) according to claim 4, **characterised in that** the tarpaulin holder (14) is formed in the manner of a bent plate.

6. Vehicle structure (1) according to any of claims 1 to 5, **characterised in that** the tarpaulin holder (14) comprises fastening elements for securing the sliding tarpaulin (7) and/or the sliding-tarpaulin connector (15).

7. Vehicle structure (1) according to any of claims 1 to 5, **characterised in that** the tarpaulin holder (14) comprises at least one opening (16.3) which is provided in the connection region (14.3) of the tarpaulin holder (14) that faces the sliding tarpaulin (7), and through which a belt-like sliding-tarpaulin connector (15) is guided.

8. Vehicle structure (1) according to claim 7, **characterised in that**, above the opening (16.3) provided in the connection region (14.3) of the tarpaulin holder (14), at least one additional opening (16.1, 16.2) is provided in the tarpaulin holder (14) though which the belt-like sliding-tarpaulin connector (15) is guided.

9. Vehicle structure (1) according to either claim 7 or claim 8, **characterised in that** the tarpaulin holder (10) comprises three elongate openings (16.1, 16.2, 16.3), arranged one above the other, through which the belt-like sliding-tarpaulin connector (15) is guided.

10. Vehicle structure (1) according to claim 9, **characterised in that** the belt-like sliding-tarpaulin connector (15) on the side of the tarpaulin holder (14) facing the external beam profile (6) of the structure can be inserted into the opening (16.3) located in the outer region facing the sliding tarpaulin (7), is guided therefrom, on the side of the tarpaulin holder (10) facing away from the external beam profile (6) of the structure, upwards towards the opening in the tarpaulin holder (10) adjacent to the fastening attachment (13) and is guided through said opening, and is guided on the inside of the tarpaulin holder into the central opening (16.1) of the tarpaulin holder (10), is guided therethrough and is guided on the outside of the tarpaulin holder (14), facing away from the external beam profile (6) of the structure, into the opening (16.3) located in the connection region (14.3) that faces the sliding tarpaulin (7), through from outside to inside, and rests against the inside, facing the external beam profile (6) of the structure, of the belt-like sliding-tarpaulin connector (15) coming from the sliding tarpaulin (7), such that the belt-like sliding-tarpaulin connector (15) can be longitudinally adjustably secured on the tarpaulin holder (14) in a self-clamping manner.

## Revendications

1. Structure de véhicule (1) comprenant un espace de chargement qui s'étend au-dessus du plancher de l'espace de chargement et qui peut être ouvert et fermé par endroits par au moins une bâche coulissante (7) déplaçable le long d'un guide (11) d'une bôme extérieure profilée (6) par l'intermédiaire d'au moins un coulisseau à galets (10), le coulisseau à galets (10) de la bâche comportant au moins un galet de roulement (6) rotatif qui est apte à rouler le long du guide (11) de la bôme extérieure profilée (6) de la structure et qui est muni d'un appendice de fixation (13) auquel un support de bâche (14) destiné à maintenir la bâche coulissante (7) ou une attache de bâche coulissante (15) peut être fixé en étant décalé par rapport au galet de roulement (12), le support de bâche (14) comportant une zone de raccordement (14.3) tournée vers la bâche coulissante (7) et pourvue d'un logement (16.3) destiné à supporter la bâche coulissante (7) et/ou l'attache de bâche coulissante, lequel logement (16.3) est prévu de manière à être décalé vers l'intérieur d'une distance latérale (A) du galet de roulement (12) par rapport à une zone de fixation (14.1) du support de bâche (14) qui est reliée à l'appendice de fixation (13), **caractérisée en ce que** le support de bâche (14) comporte une zone de raccordement (14.3) qui est dirigée vers la bâche coulissante (7) ou l'attache de bâche coulissante (15) et qui présente un plan médian longitudinal (ABE) qui coupe le plan médian longitudinal vertical (PHE) du support de bâche (14) selon un angle aigu (α).

2. Structure de véhicule (1) selon la revendication 1, **caractérisée en ce que** la zone de raccordement (14.3) du support de bâche (14) est conçue pour être coudée par rapport à une zone de fixation (14.1) reliée à l'appendice de fixation (13) du galet de roulement (12) du coulisseau à galets (10).

3. Structure de véhicule (1) selon la revendication 1 ou 2, **caractérisée en ce que** le coulisseau à galets (10) comporte au moins deux galets de roulement (12) disposés à distance l'un de l'autre et aptes à rouler dans le guide (11) de la bôme profilée extérieure (6).

4. Structure de véhicule (1) selon l'une des revendications 1 à 3, **caractérisée en ce que** le support de bâche (14) est conçu d'une seule pièce avec sa zone de raccordement (16.3) destinée à la bâche coulissante (7) et/ou à l'attache de bâche coulissante (15).

5. Structure de véhicule (1) selon la revendication 4, **caractérisée en ce que** le support de bâche (14) est conçu à la manière d'une plaque coudée.

6. Structure de véhicule (1) selon l'une des revendications 1 à 5, **caractérisée en ce que** le support de bâche (14) comprend des éléments de fixation destinés à fixer la bâche coulissante (7) et/ou l'attache de bâche coulissante (15).

7. Structure de véhicule (1) selon l'une des revendications 1 à 5, **caractérisée en ce que** le support de bâche (14) comporte au moins une ouverture (16.3) ménagée dans la zone de raccordement (14.3), dirigée vers la bâche coulissante (7), du support de bâche et destinée au passage d'une attache de bâche coulissante (15) conçue en forme de sangle.

8. Structure de véhicule (1) selon la revendication 7, **caractérisée en ce que**, au-dessus de l'ouverture (16.3) ménagée dans la zone de raccordement (14.3) du support de bâche (14), au moins une autre ouverture (16.1, 16.2) est ménagée dans le support de bâche (14) pour permettre le passage de l'attache de bâche coulissante (15) conçue en forme de sangle.

9. Structure de véhicule (1) selon la revendication 7 ou 8, **caractérisée en ce que** le support de bâche (10) comporte trois ouvertures superposées (16.1, 16.2, 16.3) de forme allongée pour permettre le passage de l'attache de bâche coulissante (15) conçue en forme de sangle.

10. Structure de véhicule (1) selon la revendication 9, **caractérisé en ce que** l'attache de bâche coulissante (15) conçue en forme de sangle peut être introduite, du côté du support de bâche (14) qui est dirigé vers la bôme profilée extérieure (6), dans l'ouverture (16.3) placée dans la zone extérieure tournée vers la bâche coulissante, puis est guidée, du côté du support de bâche qui est opposé à la bôme profilée extérieure (6), vers le haut en direction de l'ouverture du support de bâche (10) qui est adjacente à l'appendice de fixation (13) et est insérée, du côté intérieur du support de bâche, dans l'ouverture médiane (16.1) du support de bâche, est passée à travers celle-ci et est guidée de l'extérieur vers l'intérieur, du côté extérieur du support de bâche (14) opposé à la bôme profilée extérieure (6), pour être insérée dans l'ouverture (16.3) placée dans la zone de raccordement (14.3) dirigée vers la bâche coulissante (7) et est appliquée sur le côté intérieur, dirigé vers la bôme profilée extérieure (6), de l'attache de bâche coulissante (15) conçue en forme de sangle provenant de la bâche coulissante de sorte que l'attache de bâche coulissante conçue en forme de sangle peut être fixée de manière autobloquante et déplaçable longitudinalement sur le support de bâche (14).
